# EUROPÄISCHE PATENTANMELDUNG

(11) **EP 1 356 862 A1**
(43) Veröffentlichungstag der Anmeldung: **29.10.2003**
(21) Anmeldenummer: 03006523.9
(22) Anmeldetag: 22.03.2003
(51) Int. Cl.: B01J 20/18, B01J 20/28, B01J 20/08

(54) **Adsorbens-Formkörper für Gastrennungsprozesse**

(30) Priorität: 28.03.2002 DE 10213922
(71) Anmelder: Chemiewerk Bad Köstritz GmbH, 07586 Bad Köstritz (DE)
(72) Erfinder: Brandt, Alfons, 06198 Salzmünde (DE); Lübke, Manfred, 07629 Hermsdorf (DE); Schmeisser, Jens, 06712 Kretzschau (DE); Schöps, Wolfgang, 07629 Hermsdorf (DE); Tschritter, Hartmut, 06546 Gera (DE); Unger, Baldur, 06846 Dessau (DE)
(74) Vertreter: Däsch, Götz, Dipl.-Ing.

(57) **Zusammenfassung**

Aufgabe der Erfindung ist es, einen Adsorbens-Formkörper vorzuschlagen, dessen statische Adsorptionskapazität, die sich im Gleichgewicht einstellt, im wesentlichen auch für dynamische, im Taktwechsel von Adsorption und Desorption durchgeführte Prozesse wirksam werden zu lassen.

Diese Aufgabe wird gelöst, indem die statische Gleichgewichts-Adsorptionskapazität des Adsorberwerkstoffs überwiegend für die im Wechsel durchgeführte Adsorption-Desorption wirksam ist, indem offene Makroporen für den Gastransport in Form von Strukturporen im Formkörper und/oder minimale Transportwege durch schichtförmigen Adsorberwerkstoff auf Trägern mit offenen Poren vorgesehen sind.

Die Erfindung ist bei der Gastrennung anwendbar.

## Beschreibung

Die Erfindung betrifft einen Adsorbens-Formkörper für die adsorptive Trennung von Gasgemischen, wie sie durch die Prozesse der Druckwechseladsorption (PSA, VSA, VPSA) und der Temperaturwechseladsorption (TSA) durchgeführt wird.

Diese Prozesse arbeiten taktweise, indem bei einem Druckniveau (Temperaturniveau) die selektive Adsorption und bei einem anderen Druckniveau (Temperaturniveau) die Desorption der Moleküle einer Gaskomponente der Mischung erfolgt. Dies wird technisch dadurch erreicht, daß mindestens zwei Adsorber-Festbettreaktoren im Wechsel durchströmt werden. Die leistungsbestimmende Taktzeit des Wechsels ist davon abhängig, wie schnell die Gasmoleküle bei der Adsorption zu den aktiven Zentren und bei der Desorption an die Oberfläche des Adsorbers transportiert werden, d.h. wie groß die Diffusions- oder Transportgeschwindigkeit ist.

Üblicherweise werden Adsorber in Granulatform mit Korngrößen von 1,6 mm ... 2,5 mm eingesetzt und damit Taktzeiten von ca. 60 Sekunden realisiert.

Zur Verringerung der für den Diffusionstransport der Gasmoleküle erforderlichen Zeiten sind grundsätzlich zwei Wege möglich. Zum einen kann die Länge des Transportweges verkürzt und zum anderen der Transportwiderstand verringert werden. Bekannt für den ersten Weg ist, daß die Korngröße der in Granulatform eingesetzten Adsorber verringert wird. So sind mit Granulaten von 0,125 mm ... 0,84 mm Taktzeiten von < 30 Sekunden erzielt worden, wie in z.B. in Patent US 4.194.892 beschrieben wurde. Nachteilig dabei ist, daß mit kleineren Korngrößen der Druckverlust im Festbett-Adsorber steigt und damit höhere Energieaufwendungen ergibt.

Ein weiterer Weg wird durch das Patent US 6.284.021 B1 (= EP 1 080 771 A1) und auch FR 2 794 993 vorgeschlagen, indem ein Kompositkorn als Adsorber verwendet wird, das aus einem inerten nichtporösen Kern und einer darauf aufgetragenen porösen Schicht aus Zeolith besteht. Diese Form des Adsorbers geht davon aus, daß wegen der kurzen Prozeßzeiten zur Adsorption und Desorption nicht das ganze Volumen des Adsorberkorns am Austausch teilnimmt. Die geringere Adsorbermasse und damit Adsorptionskapazität wird durch den Gewinn an höherer Transportgeschwindigkeit mehr als aufgewogen.

Eine Variante dieser Lösung gemäß US 6.284.021 B1 ist ein Kompositkorn, bei dem der inerte Kern ein Hohlraum ist, wie es auch in /Lü, Y.; Bülow, M., Adsorption 6(200),125-136/ theoretisch untersucht und in /Tang, Y, et al, 13. Zeolithkonf. Montpellier 2001,21-P-06/ experimentell geprüft wurde. Ein weiterer Lösungsweg ist die Ausbildung dünner Adsorberschichten auf einem Träger durch direkte Synthese eines Zeolithes auf der Trägeroberfläche. Auf diese Weise wurden in /Seijger, G.B.F. et al Microporous and Mesoporous Materials 39(2000),195-204/ die zugängige Oberfläche eines Keramikschaumes, in /Öhrmann, O. et al, 13. Zeolithkonf. Montpellier 2001, 20-P-09/ ebenfalls Keramikschaum sowie Tonerdekugeln und in /Mintova, S. et al, Zeolites 16(1996),31-34/ Fasern aus Zellulose beschichtet. Die Beschichtung von Keramik-Waben mit Zeolithen ausgewählter Typen wird in JP 061 98 164 angegeben.

Für die zweite Möglichkeit, die Taktzeiten durch Minimierung des Diffusionswiderstandes mittels Erzeugung von Makroporen im Adsorberkorn zu verkürzen, nennt die Patentanmeldung EP 0 940 174 A2 als anzustrebende Parameter ein Makroporenvolumen von > 250 mm³/g und einen Porendurchmesser der Transportporen von > 100 nm; das Patent WO 99/43 415 empfiehlt für den Durchmesser der Makroporen > 100 nm bei einer Porosität von > 23 %. Erzeugt wird der Makroporenanteil gemäß EP 0 940 174 A2 durch die Verwendung des Zeolithtyps Faujasit mit einem Verhältnis SiO2/Al2O₃ = 1,9 ... 2,1 unter Einsatz eines herkömmlichen Herstellungsverfahrens mittels Mischen, Kneten, Formen und Runden. Typische Daten der so erzeugten Adsorbermaterialien sind Makroporen mit einem Porendurchmesser von 500 nm bei einem Porenvolumen von 270 mm³/g.

Die Patentschriften JP 112 46 282 und JP 112 46 214 beschreiben für die Zeolith-Typen X bzw. A Adsorber mit einem Porenvolumen von >250 mm³/g, die mittels einer Mischung aus Zeolithpulver und faserigen Tonpulver zu Granulat geformt werden. Im Patent WO 99/43 415 wird der Makroporenanteil durch die Zugabe von Ausbrennstoff zur Zeolith-Binder-Mischung und dem thermischen Austreiben nach der Verformung erzeugt.

Aufgabe der Erfindung ist es, einen Adsorbens-Formkörper vorzuschlagen, dessen statische Adsorptionskapazität, die sich im Gleichgewicht einstellt, auch nahezu für dynamische, im Taktwechsel von Adsorption und Desorption durchgeführte Prozesse wirksam werden zu lassen. Daraus ergibt sich zum einen, einen Adsorbens-Formkörper vorzuschlagen, dessen Struktur durch ein gezielt erzeugtes Lückenvolumen zwischen den Partikeln offene Makroporen im Bereich von 50 nm ... 500 nm besitzt, wobei Mesoporen des Größenbereiches 5 nm ... 50 nm weitgehend nicht vorhanden sind, wodurch Diffusionshinderungen für den Gastransport vermieden werden. Ein weitere Aufgabe der Erfindung besteht zum anderen darin, daß der Adsorberwerkstoff durch geeignete Beschichtungsmethoden auf Träger, insbesondere Schaumkörper, Lamellenstrukturen sowie Fasern aufgetragen wird, wobei die Strukturporen des Trägers die Transportporen darstellen und die Gastransportwege durch die Adsorberschicht wegen der geringen Schichtdicke kurz sind.

Diese Aufgabe wird erfindungsgemäß einmal dadurch gelöst, indem in granulatförmigen Formkörpern durch eine bimodale Kornverteilung der das Granulatkorn bildenden Partikelkomponenten mit dem Aktivmaterial als Komponente mit der kleineren Partikelgröße und einem nicht aktivem Material als Komponente mit der größeren Partikelgröße eine innere Makroporenstruktur im Korn ausgebildet wird, dessen Lückenporen als Transportporen zur Verfügung stehen.

Eine weitere Lösung der Aufgabe besteht darin, daß die aktive Adsorberschicht in ihrer Stärke für die Minimierung des Transportweges gering ausgebildet wird, indem das Aktivmaterial auf eine porige Trägerstruktur aufgebracht wird.

Eine weitere Lösung der Aufgabe geht von der Kombination der vorgenannten Prinzipien aus, indem Trägerpartikel mit monomodaler Partikelgrößenverteilung durch Adsorber beschichtet und anschließend mittels eines Bindemittels in einen Formungsprozeß zu einem Granulatkorn miteinander verbunden werden. Die letztgenannte Lösung ist auch in der Weise abwandelbar, daß vorgeformte Adsorberkörner mit annähernd monomodaler Korngrößenverteilung zu einem Adsorbergranulatkorn agglomeriert werden.

Die Vorteile der erfindungsgemäßen Lösung bestehen darin, daß derartige Adsorbentien beim PSA-Prozeß die Verminderung der Taktzeiten und eine höhere Ausnutzung des Adsorbervolumens und damit eine höhere Ausbeute bei der Gastrennung ermöglichen.

Die Erfindung wird durch nachfolgende Erläuterungen und Ausführungsbeispiele näher beschrieben.

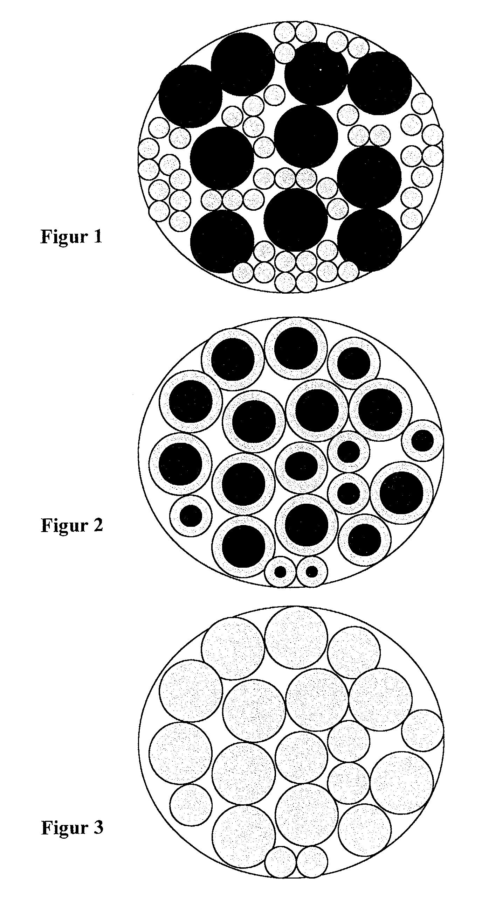

Eine übliche Adsorberform ist ein Granulat, wobei das Gemisch des aktiven Adsorberwerkstoffs mit einem Binder durch den Formungsprozeß agglomeriert und verdichtet wird. Die Struktur eines Einzelkorns weist herstellungsbedingt eine Porosität mit Porenradien im Mesoporenbereich auf. Für den Gasmolekültransport sind Makroporen im Bereich von 0,1 µm ... 0,5 µm erforderlich. Erfindungsgemäß werden solche Poren als Strukturporen im Granulatkorn erzeugt, indem durch die Verwendung einer Mischung von Partikeln mit unterschiedlicher Partikelgröße, d.h. einer Mischung mit einer bimodalen Partikelgrößenverteilung gezielt eine Volumenporosität (Lückenvolumen) im Korn erzeugt wird. Die Partikelmischung besteht im Falle der Figur 1 aus größerem inerten Korn und dem feinen Adsorbermaterial. Die Größe des durchströmbaren Lückenvolumens im Korn kann durch das Verhältnis der Partikelgröße von Inertkorn und Adsorberkorn sowie durch die Mengenanteile bestimmt werden.

Es ist anzumerken, daß die Figuren 1 bis 3 den prinzipiellen Aufbau des Granulatkornes in Gestalt einer Grenzstruktur zeigen und die Größenverhältnisse der Granulatbestandteile willkürlich gewählt sind. Die erfindungswesentliche dynamische Produktivität der Adsorbens-Formkörper beim Druckwechseladsorptionsprozeß (VPSA) wurde bei optimierter Druckwechselfrequenz in Normal-Litern aus Luft abgetrennten O₂ von 90 %iger Reinheit pro kg Adsorbens-Formkörper und pro Stunde (l_{N} kg⁻¹ h⁻¹) bestimmt.

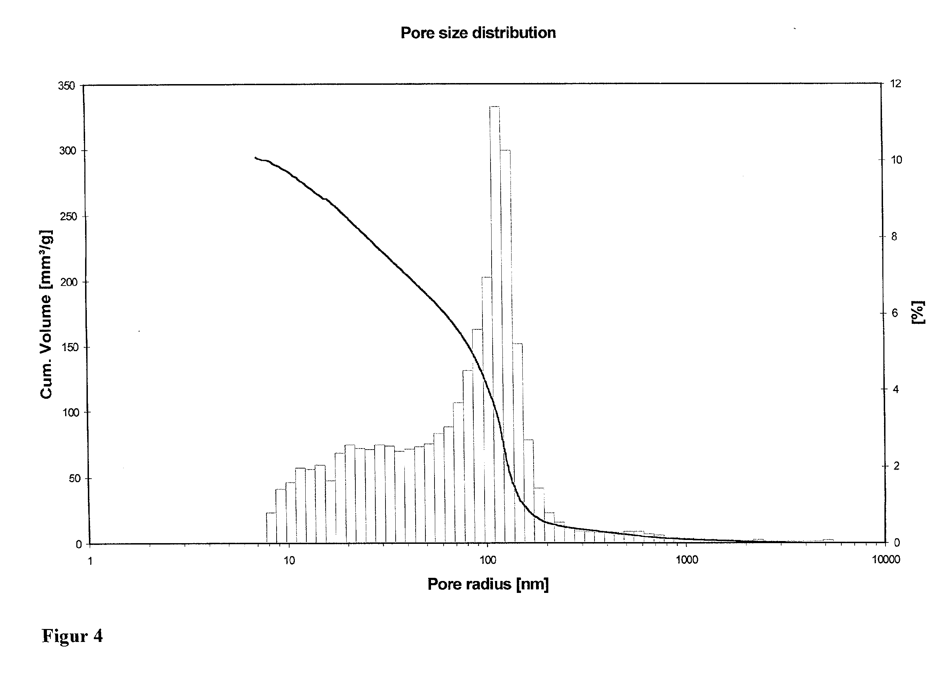

### Beispiel 1 (Stand der Technik zum Vergleich, Figur 4)

Ein Zeolith der Type 13X (mittlere Partikelgröße 3,1 µm) wird mit einem üblichen Attapulgit als Binder (mittlere Partikelgröße 6,6 µm) gemischt und labormäßig in einem Mischgranulator granuliert. Dieses Granulat wurde bei 480 °C kalziniert und hat danach folgende Eigenschaften:

| | |
|---|---|
| Korngröße | 1,6 mm ... 2,5 mm |
| offenes Porenvolumen | 294,0 mm³ g⁻¹ |
| mittlerer Porenradius der Makroporen | 84,7 nm |
| Druckfestigkeit | 25 N |
| Schüttdichte | 0,65 g cm⁻³ |
| Adsorptionskapazität (1 bar statisch N₂) | 7,95 l_{N} kg⁻¹ |
| dynamische Produktivität O₂ | 75 l_{N} kg⁻¹ h⁻¹ |

Die Figur 4 zeigt die Verteilung der Porenradien und des Porenvolumens, wie sie sich aus der Messung mittels Quecksilber-Hochdruckporosimetrie ergeben.

### Beispiel 2 (Anspruch 4, Figur 1)

Eine Tonerde mit einer mittleren Partikelgröße von 97µm (Martoxid MDS vom Martinswerk) wird mit einem Zeolith (Typ 13X, mittlere Partikelgröße 3,1 µm) im Verhältnis von 1:4 gemischt und mit einen handelsüblichem Na-Wasserglas in einem Mischgranulator granuliert. Nach der thermischen Behandlung hat das Adsorberkorn folgende Eigenschaften:

| | |
|---|---|
| Korngröße | 1,6 mm ... 2,5 mm |
| offenes Porenvolumen | 359,8 mm³g⁻¹ |
| mittlerer Porenradius der Makroporen | 572 nm |
| Druckfestigkeit | 25 N |
| Schüttdichte | 0,74 g cm⁻³ |
| Adsorptionskapazität (1 bar statisch N₂) | 5,93 l_{N} kg⁻¹ |
| dynamische Produktivität (O₂) | 78 l_{N} kg⁻¹ h⁻¹ |

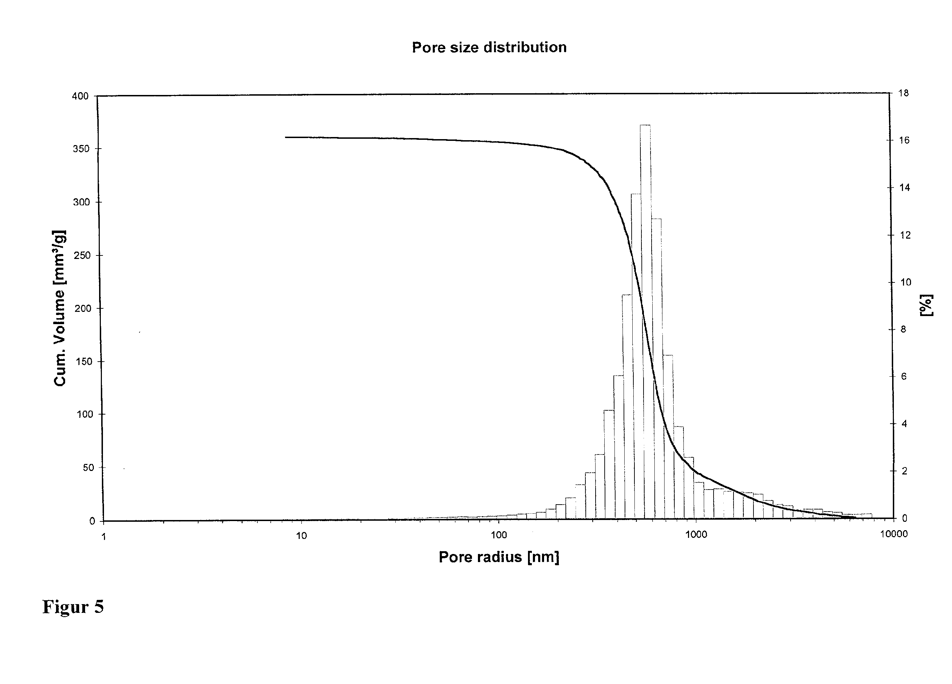

Die Figur 5 zeigt die Verteilung der Makroporen im Adsorberkorn, wie sie durch eine Hg-Porosimetermessung ermittelt wurde. Deutlich ist die wesentliche Vergrößerung des Porenradius der Makroporen gegenüber dem Vergleichsbeispiel. Die Messung zeigt auch die nahezu vollständige Eliminierung der Mesoporen für dieses Adsorbergranulat, die im Vergleichsbeispiel 1 zu einem wesentlichen Anteil der Gesamtporosität vorliegen. Die beschriebene Lösung hat außerdem den Vorteil, daß mittels des Tonerdeanteils auch das Korngewicht des Adsorbers erhöht werden kann, was strömungstechnisch bei der Anwendung günstig ist.

Die Verkürzung der Weglängen für die Gasmoleküle zu und von den aktiven Zentren des Adsorbers ist durch die Ausbildung dünner Adsorberschichten möglich. Dieser Lösungsweg setzt voraus, daß der Zeolith auf eine Trägerstruktur aufgebracht wird, um die ausreichende mechanische Festigkeit zu realisieren. Als Träger kommen bekanntermaßen keramische Wabenkörper, aber auch erfindungsgemäß keramische Schäume, Keramikfaser-Lamellenstrukturen und sog. Keramikblech sowie Schaum- oder Verbundlamellen aus Keramik in Frage. Diese Lösung wird durch das Ausführungsbeispiel 3 weiter erläutert.

### Beispiel 3 (Anspruch 13)

Ein keramischer Schaumkörper der Abmessung 100x100x20 mm³ aus Al₂O₃ (Ceralu der Firma Drache) mit Strukturporen des Trägers einer Porengröße von 20 ppi wurde mit einer Zeolith/Binder-Suspension mit einem Feststoffgehalt von 25 % getränkt, danach abgeschleudert und getrocknet. Diese Prozedur ist mehrmals wiederholt worden. An diesem Adsorberformkörper wurden folgende Eigenschaften gemessen:

| | |
|---|---|
| Zeolithbeladung (kalzinierte Probe): | 0,21 g Zeolith pro cm³ |
| Adsorptionskapazität (1 bar statisch N₂) | 2,15 l_{N} kg⁻¹ |
| dynamische Produktivität O₂ | 28 l_{N} kg⁻¹ h⁻¹ |

Eine weiter Lösungsweg als Kombination der beiden dargelegten Prinzipien wird in der Weise vorgeschlagen, daß inerte Trägerpartikel mit einer Zeolithbeschichtung versehen und diese Teilchen dann mit einem geeigneten Binder zu Granulat agglomeriert werden. Die Figur 2 verdeutlicht diesen Adsorberaufbau schematisch. Eine Demonstration dieser Lösung geben die Ausführungsbeispiele 4 und 5.

### Beispiel 4 (Anspruch 5, Figur 2)

Als Trägerkorn wird eine Tonerde mit einer mittleren Partikelgröße von 200 µm ... 300 µm (F 60 von Surfatec) mit einer Zeolith/Binder-Mischung bei einem Verhältnis von Zeolith/Al₂O₃ = 1,8/1 in einem Mischgranulator unter Zusatz von Wasserglas beschichtet und anschließend thermisch behandelt, um den Binder zu härten. Diese beschichteten Körner werden nun mittels eines Wasserglasbinders im gleichen Mischgranulator zu Granalien agglomeriert. Das Produkt hat folgende Eigenschaften:

| | |
|---|---|
| Korngröße | 1,6 mm ... 2,5 mm |
| offenes Porenvolumen | 192,3 mm³ g⁻¹ |
| mittlerer Porenradius der Makroporen | 396 nm |
| Druckfestigkeit | 28 N |
| Schüttdichte | 0,96 g cm⁻³ |
| Adsorptionskapazität (1 bar statisch N₂) | 3,85 l_{N} kg⁻¹ |
| dynamische Produktivität O₂ | 49 l_{N} kg⁻¹ h⁻¹ |

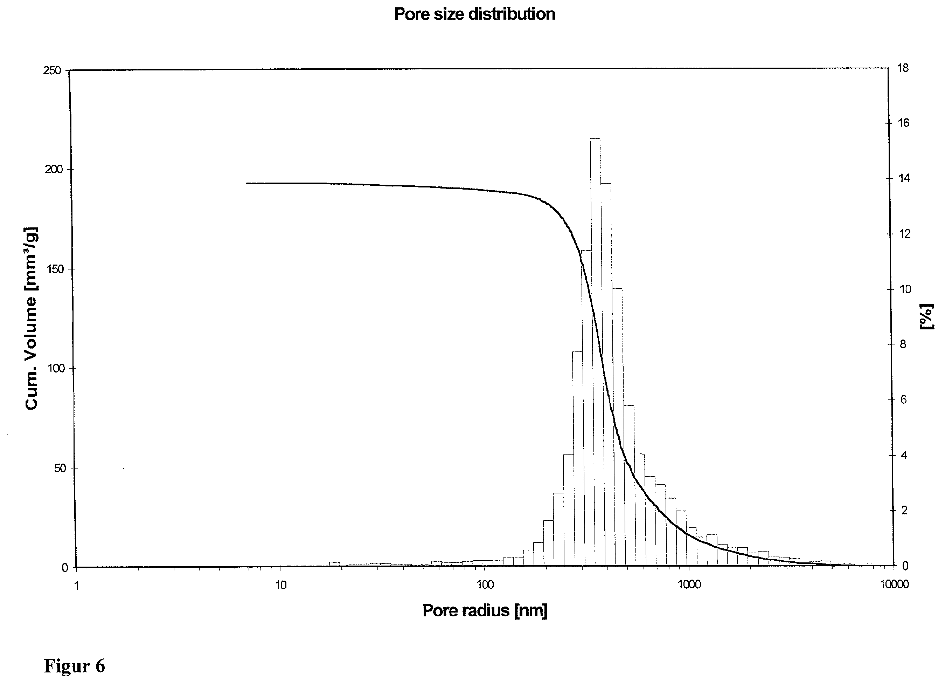

Die Messung der Makroporen dieser Granulate zeigt die Figur 6.

### Beispiel 5 (Anspruch 5, Figur 2)

In gleicher Weise wurde eine Tonerde mit einer mittleren Partikelgröße von 97 µm (Martoxid MDS vom Martinswerk) in der ersten Stufe mit Zeolith im Verhältnis Zeolith/Al₂O₃ = 4/1 beschichtet, durch eine thermische Behandlung gehärtet und anschließend mit Wasserglas agglomeriert. Die Eigenschaften dieser Probe waren folgende:

| | |
|---|---|
| Korngröße | 1,6 mm ... 2,5 mm |
| offenes Porenvolumen | 357,8 mm³ g⁻¹ |
| mittlerer Porenradius der Makroporen | 518 nm |
| Druckfestigkeit | 31 N |
| Schüttdichte | 0,80 g cm⁻³ |
| Adsorptionskapazität (1 bar statisch N₂) | 5,03 l_{N} kg⁻¹ |
| dynamische Produktivität O₂ | 66 l_{N} kg⁻¹ h⁻¹ |

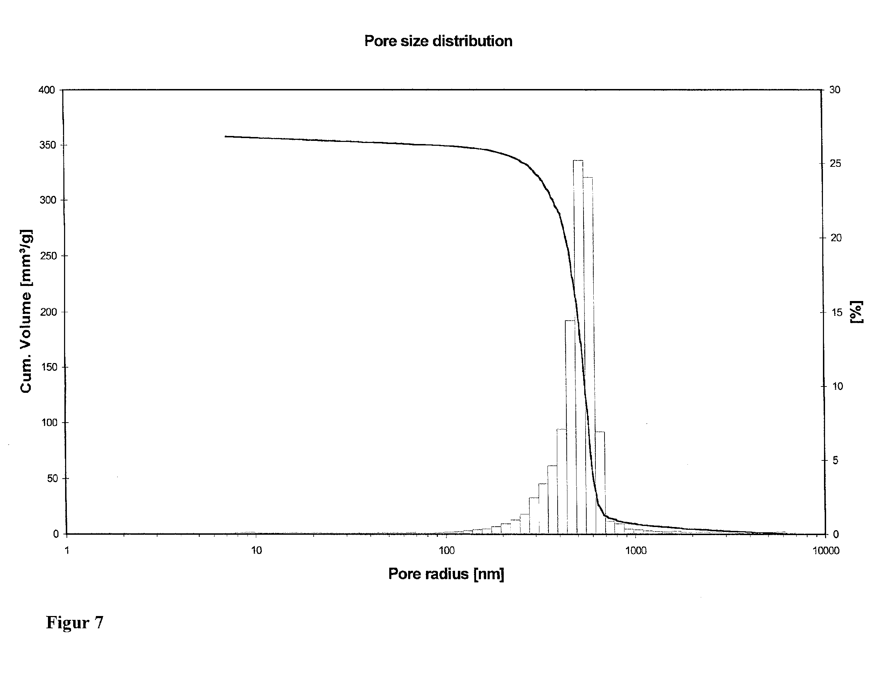

Die Messung der Makroporen dieser Granulate zeigt die Figur 7. Die Beschichtung der Trägerpartikel mit dem Zeolith kann auch in der Wirbelschicht erfolgen.

Das in den Beispielen 4 und 5 dargelegte Prinzip läßt sich dahingehend abwandeln, daß anstelle der Partikel aus Trägerkorn mit Zeolith-Beschichtung direkt ein vorgeformtes Zeolithkorn verwendet wird, wobei eine geeignete enge Kornverteilung im daraus hergestellten agglomerierten Granulatkorn die Einstellung der gewünschte Porengröße der Lückenporen ermöglicht. Dieses Prinzip zeigt die Figur 3 in schematischer Darstellung. Das Ausführungsbeispiel 6 legt eine Demonstration dieser Möglichkeit dar.

### Beispiel 6 (Anspruch 7, Figur 3)

Aus dem Gemisch Zeolith/Binder wird eine wässrige Suspension mit einem Feststoffgehalt von 50 % aufbereitet, die mittels eines Sprühgranulators getrocknet und zu Partikeln mit einer mittleren Größe von 80 µm ... 100 µm granuliert wird. Dieses Sprühgranulat wird mit einem Wasserglasbinder in einem Mischgranulator agglomeriert, wobei man Granulate mit folgenden Eigenschaften erhält:

| | |
|---|---|
| Korngröße | 1,6 mm ... 2,5 mm |
| offenes Porenvolumen | 365,3 mm³ g⁻¹ |
| mittlerer Porenradius der Makroporen | 197 nm |
| Druckfestigkeit | 30 N |
| Schüttdichte | 0,68 g cm⁻³ |
| Adsorptionskapazität (1 bar statisch N₂) | 5,29 l_{N} kg⁻¹ |
| dynamische Produktivität O₂ | 51 l_{N} kg⁻¹ h⁻¹ |

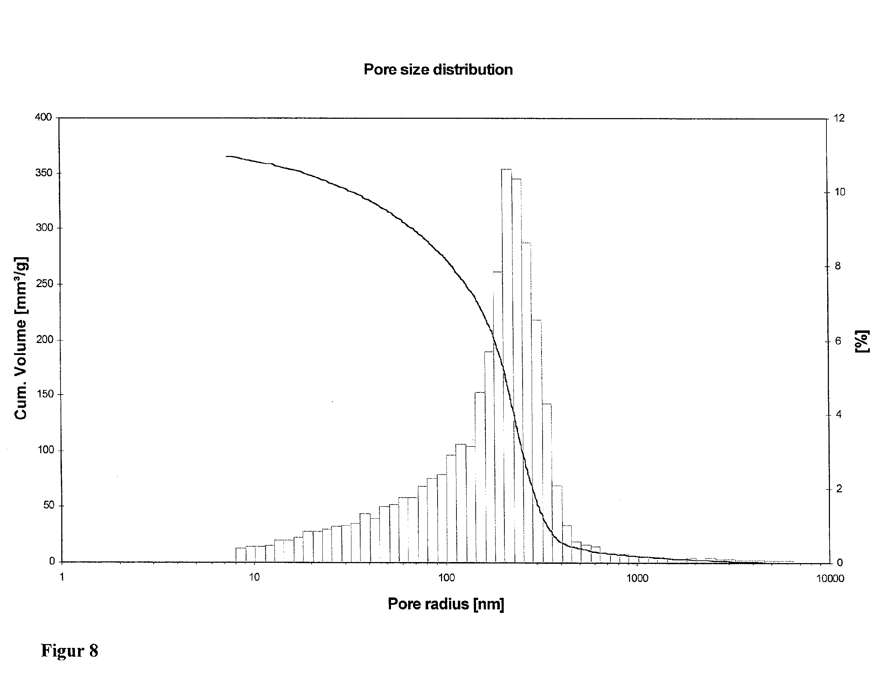

Die Messung mittels Hg-Porosimeter zeigt die Figur 8.

Da die statische Adsorptionskapazität eines Adsorbens-Formkörpers mit seinem Gehalt an Aktivkomponente korelliert, kann an Hand der erfindungsgemäßen Beispiele 2 bis 6 gezeigt werden, daß der Nutzungsgrad der Zeolithkomponente im dynamischen Gastrennungsprozeß gegenüber dem Stand der Technik deutlich verbessert wird.

## Patentansprüche

1. Adsorbens-Formkörper für dynamische Adsorptions-Desorptionsprozesse zur Gastrennung, **dadurch gekennzeichnet, daß** die statische Gleichgewichts-Adsorptionskapazität des Adsorberwerkstoffs überwiegend für die im Wechsel durchgeführte Adsorption-Desorption wirksam ist, indem offene Makroporen für den Gastransport in Form von Strukturporen im Formkörper und/oder minimale Transportwege durch schichtförmigen Adsorberwerkstoff auf Trägern mit offenen Poren vorgesehen sind.

2. Adsorbens-Formkörper nach Anspruch 1, **dadurch gekennzeichnet, daß** das Lückenvolumen zwischen den Primärpartikeln, aus denen der Formkörper aufgebaut ist, die Größenordnung der für die Gasdiffusion erforderlichen Makroporen hat.

3. Adsorbens-Formkörper nach Anspruch 2 **dadurch gekennzeichnet, daß** er ein Granulatkorn ist.

4. Granulat nach Anspruch 3 **dadurch gekennzeichnet, daß** das Granulatkorn aus einem Partikelgemisch mit kleinen Partikeln aus Adsorberwerkstoff und größeren inerten Partikeln aufgebaut ist.

5. Granulat nach Anspruch 3 **dadurch gekennzeichnet, daß** das Granulatkorn aus monomodalen inerten Partikeln, die mit aktivem Adsorberwerkstoff beschichtet sind, aufgebaut ist.

6. Granulat nach einem der Ansprüche 4 oder 5, **dadurch gekennzeichnet, daß** die inerten Partikel aus Keramik, insbesondere Tonerdekeramik bestehen.

7. Granulat nach Anspruch 3 **dadurch gekennzeichnet, daß** das Granulatkorn aus einem vorgeformten Korn aus Adsorberwerkstoff mit monomodaler Kornverteilung aufgebaut ist.

8. Granulat nach einem der Ansprüche 3 bis 7, **dadurch gekennzeichnet, daß** es im Korngrößenbereich von 0,5 mm bis 10 mm, insbesondere von 1 mm bis 5 mm liegt.

9. Granulat nach einem der Ansprüche 3 bis 8, **dadurch gekennzeichnet, daß** die Makroporen einen Porendurchmesser von 100 nm ...1200 nm, insbesondere 200-1000 nm aufweisen und die Porenvolumina der Makroporen von 100 mm³/g ... 800 mm³/g, insbesondere 200 mm³/g ... 600 mm³/g, liegen.

10. Granulat nach einem der Ansprüche 3 bis 9 **dadurch gekennzeichnet, daß** der aktive Adsorberwerkstoff ein Zeolith, insbesondere ein Zeolith der Typen LTA, FAU, MFI, MOR, MEL, BEA ist.

11. Adsorbens-Formkörper nach Anspruch 1, **dadurch gekennzeichnet, daß** ein offenporiger Träger mit einer Schicht aus einer Mischung aus Adsorberwerkstoff und einem üblichen Binder im Bereich der gesamten Oberfläche der offenen Poren und/oder äußeren Oberfläche belegt ist.

12. Adsorbens-Formkörper nach Anspruch 11, **dadurch gekennzeichnet, daß** der mittlere Porendurchmesser der offenen Poren des Trägers im Bereich von 0,3 mm bis 3 mm, vorzugsweise 1 mm bis 2,5 mm liegt.

13. Adsorbens-Formkörper nach den Ansprüchen 11 und 12, **dadurch gekennzeichnet, daß** der Träger ein Keramik-Schaumkörper ist.

14. Adsorbens-Formkörper nach den Ansprüchen 11 und 12, **dadurch gekennzeichnet, daß** der Träger aus keramische Lamellenstrukturen, sog. Keramikblech oder keramische Fasern besteht.

15. Adsorbens-Formkörper nach Anspruch 11 und 12, **dadurch gekennzeichnet, daß** der Träger aus einem offenporigen metallischen Schaum, einem offenporigen metallischen Träger mit Lamellenstruktur oder aus metallischer Wolle bzw. Fasern besteht.

16. Adsorbens-Formkörper nach den Ansprüchen 11 bis 15, **dadurch gekennzeichnet, daß** die Dicke der Schicht aus aktivem Adsorberwerkstoff im Bereich von 50 µm ... 1000 µm liegt.

17. Adsorbens-Formkörper nach einem der Ansprüche 11 bis 16, **dadurch gekennzeichnet, daß** die Adsorberschicht aus einem Zeolith-Binder-Gemisch besteht, wobei vorzugsweise die Zeolithe der Typen LTA, FAU, MFI, MOR, MEL, BEA verwendet werden.
